# EUROPÄISCHE PATENTANMELDUNG

(11) **EP 3 409 426 A1**
(43) Veröffentlichungstag der Anmeldung: **05.12.2018**
(21) Anmeldenummer: 18171391.8
(22) Anmeldetag: 09.05.2018
(51) Int. Cl.: B25J 9/16, G05B 19/4061, B25J 19/02, B25J 19/06, F16P 3/14, G05B 9/02, G08B 13/183

(54) **BESTIMMEN EINER BEWEGUNG EINER ABZUSICHERNDEN MASCHINE**

(30) Priorität: 31.05.2017 DE 102017111886
(71) Anmelder: Sick AG, 79183 Waldkirch (DE)
(72) Erfinder: Müncher, Herr Martin, 79261 Gutach (DE)

(57) **Zusammenfassung**

Es wird ein Sensormodul (10) zum Bestimmen der Bewegung einer abzusichernden Maschine (30) nach einem sicherheitsgerichteten Notsignal angegeben, wobei das Sensormodul (10) nachträglich und lösbar an der Maschine (30) befestigbar ist und mindestens einen Sensor (14, 16) für die Erfassung von die Bewegung beschreibenden Bewegungsdaten aufweist. Das Sensormodul (10) weist eine erste Triggerschnittstelle (18) für den Empfang eines Triggersignals, welches den Zeitpunkt des Notsignals enthält, und eine Aufzeichnungseinheit (22) auf, die zumindest einige der Bewegungsdaten aus dem Zeitraum zwischen Zeitpunkt des Notsignals und Erreichen eines sicheren Zustands der Maschine (30) speichert und/oder ausgibt.

## Beschreibung

Die Erfindung betrifft ein Sensormodul und ein Triggermodul zum Bestimmen der Bewegung einer abzusichernden Maschine nach einem sicherheitsgerichteten Nothaltsignal, insbesondere eines Roboters oder eines Fahrzeugs, nach dem Oberbegriff von Anspruch 1 beziehungsweise 6 sowie ein entsprechendes Verfahren.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Herkömmlich werden vor allem optoelektronische Sensoren wie Lichtgitter oder Laserscanner für eine sicherheitstechnische Überwachung eingesetzt. In jüngerer Zeit treten 3D-Kameras hinzu. Ein gängiges Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Es sind auch Alternativen zu Schutzfeldern bekannt, etwa darauf zu achten, dass zwischen Maschine und Person ein von der Relativbewegung abhängiger Mindestabstand eingehalten ist ("speed and separation").

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

In der sicherheitstechnischen Überwachung von Robotern, speziell Leichtbaurobotern, besteht ein zunehmender Wunsch nach engerer Zusammenarbeit mit Personen (MRK, Mensch-Roboter-Kollaboration). Dazu sollten Schutzfelder und Sicherheitsabstände möglichst eng konfiguriert werden, natürlich unter der Vorgabe, dass die Sicherheit gewährleistet bleibt. Es ist aber aufgrund der Komplexität und fehlender Angaben ausgesprochen schwierig, die Systemreaktionszeit und den Anhalte- oder Nachlaufweg eines Roboters zu bewerten, da hier zahlreiche Sensoren, Schnittstellen, Feldbusse und Steuerungen mit individuellen Verzögerungen zusammenarbeiten. Man behilft sich deshalb mit Worst-Case-Angaben des Roboterherstellers, wobei für die Nachlaufwege selbst solche Angaben häufig fehlen, da der Nachlaufweg von der bewegten Masse und damit der Nutzlast abhängt.

Folglich werden die bekannten Verzögerungen der Komponenten auf dem Signalpfad mit sehr konservativen Schätzungen für die nicht bekannten Verzögerungen aufsummiert und mit einer maximalen Geschwindigkeit des Roboterarms multipliziert, dann wird ein Nachlaufweg für die ungünstigste Last und womöglich noch ein Sicherheitszuschlag für die Unsicherheit der Schätzungen hinzugerechnet. Daraus resultieren extrem lange Anhaltezeiten und -wege und damit Sicherheitsdimensionierungen, die zwar ihre Schutzfunktion verlässlich erfüllen, eine enge Kollaboration zwischen Mensch und Maschine aber nahezu ausschließen.

Um eine größere Nähe zwischen dem Roboter und dem kollaborierenden Menschen zu ermöglichen, ist es vorteilhaft, wenn die für eine sicherheitsgerichtete Reaktion relevanten Reaktionszeiten minimiert werden oder wenn die Gefahr einer Berührung nicht nur durch konventionelle Abschaltung vermieden wird, sondern der Roboter die Gefahrensituation durch ein aktives Ausweichen entschärft. Das alles hilft aber nur weiter, wenn dies auch Eingang in die Sicherheitsbetrachtung findet, was bei dem geschilderten und üblichen konservativen Vorgehen nicht der Fall ist.

Die DE 10 2015 106 227 B3 offenbart ein Verfahren zum Steuern und/oder Regeln von Motoren eines Roboters, das die Vorhersage eines Bremsweges aus Sicherheitsgründen umfasst. Für die Sicherheitstechnik reicht eine solche Modellierung nicht aus, denn die Sicherheitsdimensionierung darf sich nicht an einer Erwartung ausrichten, sondern muss die tatsächliche Roboterbewegung berücksichtigen. Man müsste also doch wieder das Modell in eine Worst-Case-Fehlerbetrachtung einbetten und verliert dadurch den möglichen Vorteil.

In der WO 2012/042470 A1 wird eine Sicherheitsvorrichtung für einen Roboter beschrieben, welche die Roboterbewegungen diversitär mit Encodern und Inertialsensoren überwacht. Damit wird sichergestellt, dass bei dem Roboter Plan und Wirklichkeit hinsichtlich seiner Bewegungen übereinstimmt. Das ist zwar ein Sicherheitsaspekt, hat aber mit der Auslegung von Sicherheitsabständen für eine rechtzeitige Abschaltung bei Kollisionsgefahr mit einer kollaborierenden Person nichts zu tun, zumal diese Person von der Sicherheitsvorrichtung gar nicht erkannt würde.

Aus der DE 10 2007 007 576 B4 ist ein Verfahren zum Sichern eines Arbeitsraums bekannt, der mit einer 3D-Kamera beobachtet wird, um eine Abweichung von einem Soll-Zustand zu erkennen. Dazu werden die Bewegungen von Mensch und Roboter modelliert und in einer Überprüfungsphase in sicherer Technik überwacht, ob sich der Roboter wie programmiert bewegt. Die DE 10 2007 576 B4 gibt aber nicht an, welches Ausmaß eine Abweichung annehmen muss, um sicherheitskritisch zu sein, und wie diese Abweichung festlegende Sicherheitsabstände für eine engere Mensch-Maschine-Kooperation geringer werden könnten.

Es ist daher Aufgabe der Erfindung, die Auslegung einer sicherheitstechnischen Überwachung zu verbessern.

Diese Aufgabe wird durch ein Sensormodul und ein Triggermodul gemäß Anspruch 1 und 6 zum Bestimmen der Bewegung einer abzusichernden Maschine nach einem sicherheitsgerichteten Nothaltsignal, insbesondere eines Roboters oder eines Fahrzeugs sowie ein entsprechendes Verfahren gemäß Anspruch 10 gelöst. Das sicherheitsgerichtete Notsignal löst eine Absicherung der überwachten Maschine aus, wobei dies außer dem üblichen Abbremsen oder Verbringen in den Stillstand auch eine Ausweichbewegung sein kann. Das Sensormodul ist kein Teil der Maschine, sondern ein kleines Zusatzgerät, das nachträglich angebracht wird. Es ist mit Hilfe mindestens eines Sensors in der Lage, Bewegungsdaten zu erfassen, die zumindest den sicherheitsrelevanten Teil der Bewegung rekonstruierbar machen.

Die Erfindung geht nun von dem Grundgedanken aus, die tatsächliche Bewegung der Maschine nach einem sicherheitsgerichteten Notsignal zu messen. Dazu ist eine erste Triggerschnittstelle für den Empfang eines Triggersignals vorgesehen, das den Zeitpunkt des sicherheitsgerichteten Notsignals mitteilt. Die Übertragung des Triggersignals erfolgt vorzugsweise drahtlos, um das Anbringen des Sensormoduls zu vereinfachen und störende Leitungen während der Bewegungen der Maschine zu vermeiden. Das Sensormodul zeichnet Bewegungsdaten im Zeitraum zwischen dem durch das Triggersignal bezeichneten Zeitpunkt des Notsignals und dem Erreichen eines sicheren Zustands der Maschine auf. Welche Bewegungsdaten das sind, hängt von der konkreten Sicherheitsanwendung beziehungsweise Konfiguration des Sensormoduls ab. So sind schon bereits allein die Zeitpunkte, wann sich das Bewegungsverhalten nach dem Notsignal erstmals verändert oder wann die Maschine zum Stehen kommt beziehungsweise die Dauer zwischen diesen Zeitpunkten für die Reaktionszeit beziehungsweise den Nachlaufweg ausgesprochen relevant.

Die Erfindung hat den Vorteil, dass das Verhalten der Maschine und die Verzögerungen auf den Signalwegen des sicherheitsgerichteten Notsignals präzise bestimmt werden, also durch das Sensormodul Rektionszeiten, Nachlaufwege oder Auswirkung von unterschiedlichen bewegten Massen bekannt sind. Das System kann deshalb mit optimierten Sicherheitsabständen ausgelegt werden, die eine deutlich größere Nähe von Mensch und Maschine ermöglichen. Die Konfiguration, Optimierung und Verifikation der eingesetzten Sicherheitstechnik wird vereinfacht und verbessert. Eine Überdimensionierung der Sicherheitsabstände mit herkömmlicher konservativer Abschaltung des Systems zum Ausgleich unbekannter Verzögerungen und Bewegungen ist nicht mehr erforderlich, da dies durch direkte Messung bestimmt wird.

Die Bewegungsdaten weisen bevorzugt mindestens eine der Größen Position, Geschwindigkeit, Beschleunigung auf, insbesondere jeweils mit einem Zeitstempel. Wie schon ausgeführt, ist es nicht erforderlich, alle diese Größen über die gesamte Zeitspanne von Zeitpunkt des Notsignals bis Erreichen des sicheren Zustands zu messen und aufzuzeichnen, wenn es beispielsweise nur darum geht, Reaktionszeiten zu bestimmen. Überdies sind die genannten Größen nicht unabhängig, etwa liefert das Integrieren von Geschwindigkeitsvektoren den Positionsversatz. Es ist aber durchaus denkbar, das Bewegungsverhalten an sich mathematisch überbestimmt zu erfassen, um besonders zuverlässige Daten zu erhalten.

Das Sensormodul weist bevorzugt einen Beschleunigungssensor und/oder einen Drehraten- beziehungsweise Gyrosensor auf. Damit werden Bewegungsänderungen in allen sechs Freiheitsgraden bestimmt, und damit ist die Bewegung vollständig beschreibbar. Je nach Anwendung müssen aufgrund von Randbedingungen nicht alle Freiheitsgrade überwacht werden.

Das Sensormodul ist vorzugsweise energieautark. Dazu ist beispielsweise eine Batterie oder ein Akku vorgesehen. Bei manchen Maschinen wäre auch ein Versorgungsanschluss denkbar. Es ist aber vorteilhaft, die notwendigen Leitungen zu vermeiden und eine für die Messung optimale Anordnung frei wählen zu können.

Das Sensormodul weist vorzugsweise eine drahtlose Ausgabeschnittstelle zur Ausgabe von Bewegungsdaten auf. Darüber werden die aufgezeichneten Bewegungsdaten außen verfügbar. Beispielsweise verbindet sich eine App auf einem Mobilgerät oder einem Konfigurationsrechner mit dem Sensormodul. Durch drahtlose Übertragung wird die Handhabung vereinfacht. Prinzipiell ist dafür auch eine drahtgebundene Ausgabeschnittstelle vorstellbar. Für manche Anwendungen kann eine Ausgabe in Form einer Anzeige auf dem Sensormodul genügen, oder eine Anzeige ergänzt die Datenausgabe.

Das erfindungsgemäße Triggermodul zum Erzeugen und/oder Empfangen eines sicherheitsgerichteten Notsignals an eine abzusichernde Maschine ist dafür ausgelegt, mit dem Sensormodul zusammenzuarbeiten. Es kann selbst eine Quelle für testweise erzeugte sicherheitsgerichtete Notsignale sein, beispielsweise auf Knopfdruck, die dann der Maschine zugeleitet werden, damit sie mit einer sicherheitsgerichteten Brems- oder Ausweichbewegung reagiert. Bevorzugt ist aber das Triggermodul an den Pfad angeschlossen, über den die Maschine innerhalb der Sicherheitsanwendung sicherheitsgerichtete Notsignale erhält. In diesem Fall lauscht das Triggermodul nur, um den Zeitpunkt von sicherheitsgerichteten Notsignalen zu erfahren.

Das Triggermodul verfügt über eine zweite Triggerschnittstelle zur Ausgabe eines Triggersignals, welches den Zeitpunkt des Notsignals enthält. Damit kann das Triggermodul dem erfindungsgemäßen Sensormodul die Zeitpunkte von sicherheitsgerichteten Notsignalen weiterleiten, die dort gleichsam als Startsignal für die Aufzeichnung der Bewegung im Absicherungsfall genutzt werden.

Vorzugsweise ist ein Zeitstempel für den Zeitpunkt des Notsignals in das Triggersignal codiert. Dabei handelt es sich beispielsweise um eine Modulation, die vom Sensormodul als Zeitpunkt verstanden oder zumindest mit den Bewegungsdaten gespeichert wird. Aufgrund des Zeitstempels muss die Auswahl der aufzuzeichnenden Bewegungsdaten nicht in Echtzeit ablaufen, vielmehr kann ein Triggersignal auch erst im Nachhinein den relevanten Zeitraum angeben. Voraussetzung ist natürlich, dass die Bewegung im Sensormodul vorsorglich überwacht und entsprechende Informationen zwischengepuffert werden. Alternativ wird das Triggersignal sofort mit dem sicherheitsgerichteten Notsignal erzeugt, dann ist der Zeitpunkt des Notsignals unmittelbar der Empfangszeitpunkt des Triggersignals, welches in diesem Fall in sich keine weitere Zeitinformation enthält. Etwaige Latenzen sind hier vernachlässigbar und könnten sogar gemessen und beispielsweise in Zeitstempeln des Sensormoduls berücksichtigt werden. Dieses alternative Vorgehen funktioniert nur in Echtzeit, hat aber den Vorteil, dass der Sensor nur jeweils in der relevanten Phase zwischen Nothaltsignal und sicherem Zustand aktiv sein muss und dadurch insbesondere weniger Energie verbraucht.

Die zweite Triggerschnittstelle ist bevorzugt als Infrarotschnittstelle ausgebildet. Es genügt, das dann infrarote Triggersignal unfokussiert wie bei einer Fernbedienung grob in Richtung des Sensormoduls auszusenden, eine besondere Justierung ist nicht erforderlich. Eine andere drahtlose Übertragung des Triggersignals ist auch vorstellbar, drahtgebunden zwar prinzipiell möglich, aber praktisch wegen der eingeschränkten Bewegungsfreiheit störender Leitungen deutlich nachteilig.

In bevorzugter Weiterbildung ist eine Anordnung zum Bestimmen der Bewegung einer abzusichernden Maschine nach einem sicherheitsgerichteten Notsignal vorgesehen, insbesondere eines Roboters oder eines Fahrzeugs, wobei die Anordnung ein erfindungsgemäßes Sensormodul und ein erfindungsgemäßes Triggermodul aufweist. Sensormodul und Triggermodul arbeiten in dieser Anordnung bestimmungsgemäß zusammen.

Bei dem erfindungsgemäßen Verfahren zum Bestimmen der Bewegung einer abzusichernden Maschine nach einem sicherheitsgerichteten Notsignal, insbesondere eines Roboters oder eines Fahrzeugs, wird ein Sensormodul mit mindestens einem Sensor für die Erfassung von die Bewegung der Maschine beschreibenden Bewegungsdaten, insbesondere ein erfindungsgemäßes Sensormodul, lösbar an der Maschine angebracht. Dann wird vorzugsweise wiederholt ein sicherheitsgerichteter Nothalt der Maschine ausgelöst und ein Triggersignal, welches den Zeitpunkt des Notsignals enthält, an das Sensormodul übertragen, insbesondere durch ein erfindungsgemäßes Triggermodul. Daraufhin werden Bewegungsdaten des Sensormoduls zwischen dem durch das Triggersignal bezeichnetem Zeitpunkt des Notsignals und Erreichen eines sicheren Zustands der Maschine gespeichert oder ausgegeben. Das erfindungsgemäße Verfahren kann auf ähnliche Weise weitergebildet werden wie das Sensormodul beziehungsweise Triggermodul und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Das Verfahren wird bevorzugt zu einem Verfahren zur Konfiguration und/oder Verifikation mindestens eines Sicherheitssensors weitergebildet, der eine abzusichernde Maschine überwacht und bei Unterschreiten eines Sicherheitsabstands zwischen Maschine und einem erfassten unzulässigen Objekt ein sicherheitsgerichtetes Nothaltsignal an die Maschine ausgibt. Dazu wird die Bewegung der Maschine nach einem sicherheitsgerichteten Nothaltsignal mit dem erfindungsgemäßen Verfahren bestimmt und der Sicherheitsabstand anhand der gespeicherten oder ausgegebenen Bewegungsdaten verifiziert oder angepasst. Auf diese Weise können optimierte Sicherheitsabstände gefunden werden, die eine wesentlich engere Zusammenarbeit von Mensch und Maschine bei voller Sicherheit ermöglichen, beziehungsweise es kann nachgewiesen oder verifiziert werden, dass gewählte Sicherheitsabstände tatsächlich keine Abstriche bei der Sicherheit bedeuten.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung eines Sensormoduls und eines Triggermoduls;
- Fig. 2: eine schematische Ansicht eines an einem Roboter angebrachten Sensormoduls und eines an den Sicherheitsausgang einer überwachenden Sicherheitskamera angeschlossenen Triggermoduls; und
- Fig. 3: ein Ablaufdiagramm für ein Verfahren zum Festlegen von Sicherheitsabständen mit Hilfe des Sensormoduls und des Triggermoduls.

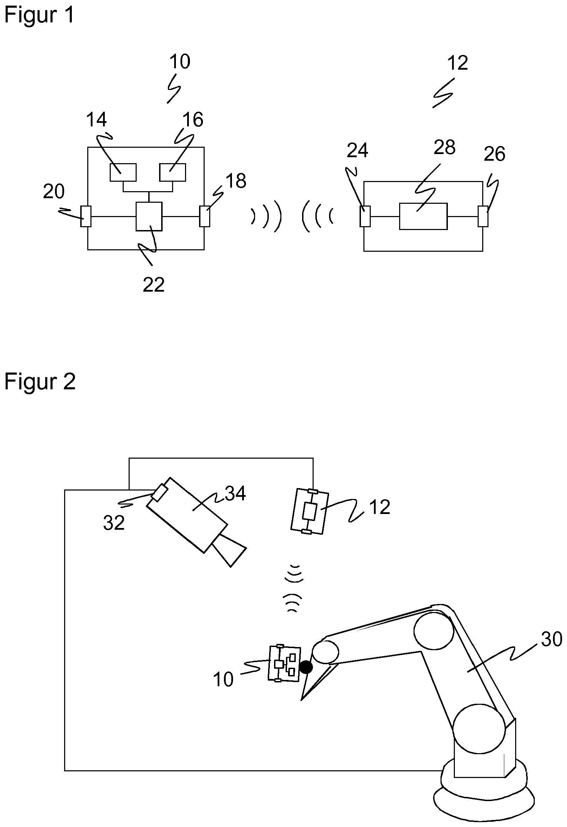

Figur 1 zeigt eine Blockdarstellung eines Sensormoduls 10 zur Bestimmung der Reaktionszeit beziehungsweise Bewegung einer abzusichernden Maschine nach einem sicherheitsgerichteten Nothalt und eines zugehörigen Triggermoduls 12 zur Übermittlung eines Triggersignals, welches Zeitpunkte eines sicherheitsgerichteten Nothalts mitteilt.

Das Sensormodul 10 ist ein kleines Gerät zur Anbringung an einem gefahrbringenden Objekt. In dieser Beschreibung wird ein Roboter als Beispiel des gefahrbringenden Objekts verwendet, aber andere Maschinen und auch Fahrzeuge sind ebenso denkbar, insbesondere autonome Fahrzeuge (AGC, Automated Guided Cart oder AGV, Automated Guided Vehicle). Das Sensormodul wird nachträglich und lösbar angebracht, beispielsweise durch Magnete, eine Klemmhalterung, ein Klettband oder ein Klebeband, und zwar vorzugsweise in der Nähe der Stelle größter Gefahr, etwa eine Werkzeugspitze.

Das Sensormodul 10 weist mindestens einen Sensor auf, um die eigene Bewegung und damit die Bewegung des Objekts zu erfassen, an dem es angebracht ist. In der Ausführungsform gemäß Figur 1 sind beispielhaft ein Beschleunigungssensor 14 sowie ein Drehratensensor 16 vorgesehen. Die Beschleunigungen und Drehraten können je nach Anwendung in ein bis drei Dimensionen bestimmt werden. Durch Integration der Beschleunigungsvektoren kann die Momentangeschwindigkeit, mittels der Drehrate die Bewegungsrichtung ermittelt werden. Diese Berechnungen erfolgen im Sensormodul 10 oder nachträglich. Andere oder zusätzliche Sensoren sind auch möglich. Ein Beispiel ist ein Positionssensor, der seine eigene Position anhand von bekannten Sendern ermittelt. Diese Technik funktioniert wie GPS, jedoch auch innen und mit höherer Auflösung, und anstelle von Funk sind auch andere Signale wie Ultraschall denkbar. Gegebenenfalls ist auch ein Sensor zur Ermittlung einer Nutzlast denkbar, oder solche Zusatzinformationen werden von eigenen Sensoren der Maschine abgefragt.

Das Sensormodul 10 verfügt über eine erste Triggerschnittstelle 18, vorzugsweise mit einem IR-Empfänger, an der ein Triggersignal erkannt wird, welches anzeigt, dass ein sicherheitsgerichteter Nothalt ausgelöst wurde. Außerdem ist eine Ausgabeschnittstelle 20 vorgesehen, vorzugsweise eine Funkschnittstelle nach einem Standard wie WLAN, ZIGBEE, BLE oder dergleichen.

Mit den Sensoren 14, 16 und den Schnittstellen 18, 20 ist eine Aufzeichnungseinheit 22 verbunden, die auch sonstige Steuerungs- und Auswertungsfunktionen in dem Sensormodul 10 übernehmen kann. Die Aufzeichnungseinheit 22 speichert Bewegungsdaten der Sensoren 14, 16 oder daraus abgeleitete Größen in einem nicht gesondert dargestellten Speicher, vorzugsweise immer dann, wenn ein Triggersignal empfangen wurde.

Das Triggermodul 12 weist eine zweite Triggerschnittstelle 24 auf, vorzugsweise mit einem IR-Laser oder einer IR-LED, die als Sender fungiert, um ein Triggersignal an die erste Triggerschnittstelle 18 des Sensormoduls 10 zu übertragen. Weiterhin ist eine Notsignalschnittstelle 26 für sicherheitsgerichtete Notsignale vorhanden. Je nach Ausführungsform ist diese Notsignalschnittstelle 26 als Eingang oder Ausgang ausgebildet. Im ersten Fall wird das Triggermodul zusätzlich an eine Leitung angeschlossen, mit der in eine bestehende Sicherheitsanwendung sicherheitsgerichtete Signale an die überwachte Maschine übertragen werden (OSSD, Output Signal Switching Device). Das Triggermodul 12 wird auf diese Weise ebenfalls über sicherheitsgerichtete Nothalte informiert, die an der Maschine eingehen. Im zweiten Fall erzeugt das Triggermodul selbst testweise sicherheitsgerichtete Notsignale an die überwachte Maschine, sei es intern oder mit Hilfe einer Betätigungseinrichtung wie einem Knopf. Die Notsignalschnittstelle 26 fungiert hier als Sicherheitsausgang (OSSD), an den die überwachte Maschine angeschlossen wird. Eine Triggersteuerung 28 ist mit der zweiten Triggerschnittstelle 24 und der Notsignalschnittstelle 26 verbunden.

Sensormodul 10 wie Triggermodul 12 sind vorzugsweise klein mit maximalen Abmessungen von 5 cm x 10 cm x 2 cm und leicht mit einem Gewicht von höchstens 100 g. Sie können batteriebetrieben sein, etwa mit einem fest eingebauten Lithium-Ionen Akku. Sind dann auch sämtliche Schnittstellen drahtlos, so ist die gesamte Anordnung in Messprinzip, Datenwegen und Versorgung berührungslos und besonders einfach zu handhaben. Zusatzfunktionen wie eine nicht dargestellte Anzeige für Status wie Betrieb, Fehler oder aktive Datenverbindung insbesondere in Form einfacher LEDs sind möglich.

Figur 2 zeigt eine schematische Ansicht eines an einem Roboter 30 angebrachten Sensormoduls 10 und eines an einen Sicherheitsausgang 32 einer überwachenden Sicherheitskamera 34 angeschlossenen Triggermoduls 12. In dieser Ausführungsform ist also nicht das Triggermodul 12 selbst Auslöser eines sicherheitsgerichteten Notsignals, sondern die Sicherheitskamera 34, und das Triggermodul 12 erfährt davon über seinen Anschluss an der Notsignalschnittstelle 26.

Die in Figur 2 gezeigte Konfiguration ist ein Anwendungsbeispiel, das in vielerlei Hinsicht variiert werden kann. Zunächst wurde schon erwähnt, dass andere Maschinen als der Roboter 30 überwacht werden können. Weiterhin erfolgt hier die Überwachung durch die Sicherheitskamera 34 von außen. Die Sicherheitskamera 34 steht nur stellvertretend für beliebige optische oder andere Sensoren und Anordnungen von Sensoren, die den Roboter 30 und/oder sein Umfeld überwachen. Außerdem ist statt einer Überwachung von außen eine Überwachung durch einen Sensor möglich, der Teil des Roboters 30 ist, wie eine robotereigene Kamera oder eine kapazitive Haut. Die Sicherheitstechnik muss nicht Teil der Anlage insgesamt, sondern kann direkter Bestandteil des Roboters 30 selbst sein. Auch sind Kombinationen von äußeren Sensoren und Sensoren des Roboters 30 denkbar.

Um nun die Bewegung des Roboters 30 nach einem sicherheitsgerichteten Notsignal zu bestimmen, wird eine Situation gestellt, in der die Sicherheitskamera 34 eine Gefahr erkennt. Alternativ wird das sicherheitsgerichtete Notsignal künstlich in der Sicherheitskamera 34 oder einer nicht dargestellten anderen Komponente initiiert.

Die Triggersteuerung 28 des Triggermoduls 12 erkennt das sicherheitsgerichtete Notsignal an der Notsignalschnittstelle 26 und erzeugt an der zweiten Triggerschnittstelle 24 ein Triggersignal. Das Triggersignal ist bevorzugt passend codiert, um als solches erkannt zu werden, oder enthält sogar eine Codierung für einen Zeitstempel des sicherheitsgerichteten Notsignals.

Das Sensormodul 10 empfängt das Triggersignal an der ersten Triggerschnittstelle 18. Von diesem Zeitpunkt an werden mit dem Beschleunigungssensor 14 und dem Drehratensensor 16 Bewegungsdaten erzeugt und von der Aufzeichnungseinheit 22 gespeichert. Alternativ werden ständig solche Bewegungsdaten erhoben und zwischengepuffert, und das Triggersignal bezeichnet nur einen relevanten Zeitraum, welche der Bewegungsdaten weitergegeben werden sollten. Die Aufzeichnungseinheit 22 kann die Bewegungsdaten bereits weiterverarbeiten, etwa eine jeweilige Momentangeschwindigkeit und Bewegungsrichtung berechnen oder einen Zeitstempel hinzufügen. Welche Bewegungsdaten tatsächlich gespeichert und später weitergegeben werden, ist eine Frage der Konfiguration und der Anwendung. In aller Regel endet der interessierende Zeitraum, sobald der Roboter 30 einen sicheren Zustand erreicht hat, also stillsteht oder eine Ausweichbewegung abgeschlossen hat.

Über die Ausgabeschnittstelle 20 werden anschließend die von der Aufzeichnungseinheit 22 gespeicherten Bewegungsdaten weitergegeben. Das kann beispielsweise nach jedem sicherheitsgerichteten Notsignal, nach einer bestimmten Anzahl von Wiederholungen oder auf Anfrage geschehen. Ein möglicher Empfänger der Bewegungsdaten ist ein Handgerät wie ein Notebook, Tablet oder Smartphone, allgemein aber jedes Gerät, welches in der Lage ist, mit der Ausgabeschnittstelle 20 zu kommunizieren. Dort werden die Bewegungsdaten visualisiert, analysiert und dienen als Grundlage für weitere Optimierungen, Tests oder Simulationen. Die Bewegungsdaten des Sensormoduls 10 können auch mit Daten der Robotersteuerung abgeglichen oder ergänzt werden, etwa von Feedback-Sensoren des Roboters 30 mit Informationen über dessen Eigenbewegung. Auch die Bilddaten der Sicherheitskamera 34 bieten eine zusätzliche Informationsquelle zum Vergleich oder zur Verbesserung der Bewegungsdaten.

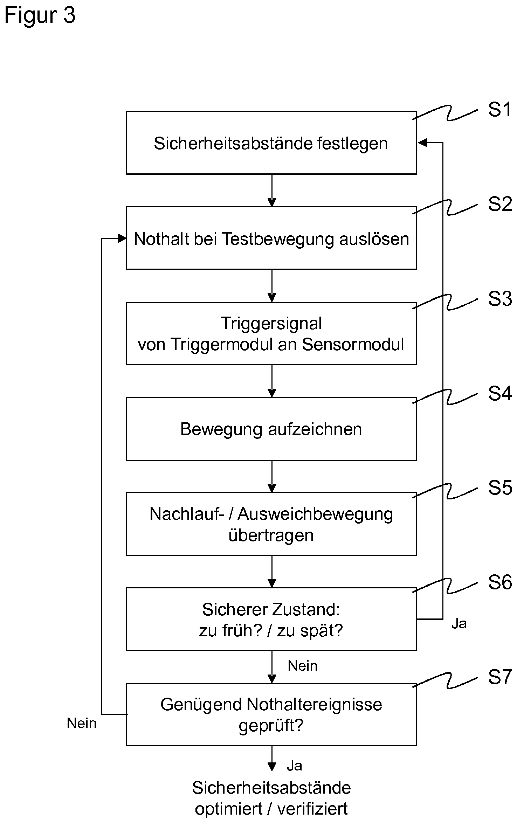

Figur 3 zeigt ein Ablaufdiagramm für eine beispielhafte Optimierung und/oder Verifikation von Sicherheitsabständen mit Hilfe des Sensormoduls 10 und des Triggermoduls 12. Dabei kann zur Orientierung die in Figur 2 gezeigte Anordnung hinzugezogen werden, die dazu aber nicht einschränkend verstanden werden darf. Eine Verifikation bedeutet nicht nur, dass überprüft wird, ob jeweils rechtzeitig auf eine gefährliche Situation reagiert wird. Dafür bräuchte es das Sensormodul 10 nicht, es genügte ein einfacher Teststab. Vielmehr können aus den aufgezeichneten Bewegungsdaten auch im Rahmen einer Verifikation Schlüsse gezogen werden, welche das Verfahren deutlich beschleunigen und verbessern.

In einem Schritt S1 werden Sicherheitsabstände festgelegt. Da dies nur ein Anfangszustand ist, sind diese Sicherheitsabstände grundsätzlich beliebig. Um zumindest die Sicherheit von Anfang an zu gewährleisten, können die anfänglichen Sicherheitsabstände ganz klassisch mit Worst-Case-Szenarien und Sicherheitszuschlägen gewählt werden.

In einem Schritt S2 wird dann testweise ein sicherheitsgerichtetes Notsignal ausgelöst. Eine Möglichkeit dafür ist, die eingestellten Sicherheitsabstände absichtlich gerade zu unterschreiten, so dass die Sicherheitsanwendung automatisch mit einem Notsignal reagiert. Das sicherheitsgerichtete Notsignal kann aber auch auf beliebige andere Weise ausgelöst werden, insbesondere aktiv durch das Triggermodul 12, und auch aus einer Bewegung in den sicheren Zustand, die nicht aus der Grenzsituation bei Unterschreitung eines Sicherheitsabstands resultiert, lassen sich später nützliche Schlüsse ziehen.

In einem Schritt S3 erzeugt das Triggermodul 12 ein Triggersignal zum Zeitpunkt des sicherheitsgerichteten Nothalts und/oder mit einer eincodierten Information dieses Zeitpunkts.

In einem Schritt S4 zeichnet das Sensormodul 10 die Eigenbewegung als Information über die Bewegung der Maschine auf, an der es angebracht ist. Die entsprechenden Bewegungsdaten sollen die Eigenbewegung im Zeitraum vom Auslösen des Notsignals bis zum Erreichen des sicheren Zustands ausreichend charakterisieren. Es sind aber auch schon Teilinformationen nützlich, etwa ist die kumulierte Reaktionszeit des Systems aus dem Zeitpunkt bestimmbar, wann eine Brems- und Ausweichbewegung einsetzt, und der Nachlaufweg aus der Endposition.

In einem Schritt S5 werden die für die Optimierung gewünschten Bewegungsdaten von dem Sensormodul 10 übertragen, vorzugsweise an ein Handgerät mit einer entsprechenden Software (App). Das können Reaktionszeiten, vollständige Bewegungsprofile oder Teile davon sein.

In einem sechsten Schritt S6 wird auf dem Handgerät anhand der übertragenen Bewegungsdaten geprüft, ob die eingestellten Sicherheitsabstände optimal sind. Inakzeptabel ist fast immer schon ein einziger Fall, in dem der sichere Zustand zu spät erreicht ist, weil davon die Gesundheit von Menschen abhängt. In diesem Fall sind die Sicherheitsabstände zu knapp und nicht verifiziert, so dass das Verfahren mit neuen Sicherheitsabständen im Schritt S1 erneut beginnt. Wenn der sichere Zustand zu früh erreicht wird, deutet das auf weiteren Optimierungsspielraum für die Sicherheitsabstände hin, die im Schritt S1 angepasst werden können. Einer Verifikation steht hier aber nichts entgegen, dies ist sicherheitstechnisch unbedenklich und kann als nicht ganz optimale Einstellung hingenommen werden.

Die bisherige Beschreibung des Verfahrens geht davon aus, dass die Bewegungsdaten direkt nach jedem sicherheitsgerichteten Notsignal übertragen und ausgewertet werden. In der Praxis wird man vorzugsweise wiederholt sicherheitsgerichtete Notsignale in unterschiedlichen Situationen erzeugen und dies dann gebündelt übertragen und auswerten.

In einem Schritt S7 wird das Verfahren beendet, sobald genügend Ereignisse mit sicherheitsgerichteten Notsignalen geprüft wurden. Das kann durch eine Statistik vorgegeben sein, etwa eine Fehlerrate entsprechend einem angestrebten standardisierten Sicherheitslevel, durch eine feste Anzahl von Wiederholungen oder dadurch, dass die erreichten Sicherheitsabstände nun klein genug für eine ausreichend enge Kollaboration von Mensch und Maschine sind, oder durch andere Kriterien.

## Patentansprüche

1. Anordnung (10, 12) zum Bestimmen der Bewegung einer abzusichernden Maschine (30), insbesondere eines Roboters oder eines Fahrzeugs, nach einem sicherheitsgerichteten Notsignal, wobei die Anordnung (10, 12) ein Sensormodul (10), das nachträglich und lösbar an der Maschine (30) befestigbar ist und mindestens einen Sensor (14, 16) für die Erfassung von die Bewegung beschreibenden Bewegungsdaten aufweist, und ein Triggermodul (12) umfasst,wobei das Sensormodul (10) eine erste Triggerschnittstelle (18) für den Empfang eines Triggersignals, welches den Zeitpunkt des Notsignals enthält, und eine Aufzeichnungseinheit (22) aufweist, die zumindest einige der Bewegungsdaten aus dem Zeitraum zwischen Zeitpunkt des Notsignals und Erreichen eines sicheren Zustands der Maschine (30) speichert und/oder ausgibt, und wobei das Triggermodul (12) zur Ausgabe des Triggersignals an die erste Triggerschnittstelle (18) an eine Leitung angeschlossen ist, mit der in einer bestehenden Sicherheitsanwendung sicherheitsgerichtete Signale an die Maschine (30) übertragen werden, oder selbst testweise sicherheitsgerichtete Signale erzeugt.

2. Anordnung (10, 12) nach Anspruch 1,
wobei die Bewegungsdaten mindestens eine der Größen Position, Geschwindigkeit, Beschleunigung aufweisen, insbesondere jeweils mit einem Zeitstempel.

3. Anordnung (10, 12) nach Anspruch 1 oder 2,
wobei das Sensormodul (10) einen Beschleunigungssensor (14) und/oder einen Drehratensensor (16) aufweist.

4. Anordnung (10, 12) nach einem der vorhergehenden Ansprüche,
wobei das Sensormodul (10) energieautark ist.

5. Anordnung (10, 12) nach einem der vorhergehenden Ansprüche,
wobei das Sensormodul (10) eine drahtlose Ausgabeschnittstelle (20) zur Ausgabe von Bewegungsdaten aufweist.

6. Anordnung (10, 12) nach einem der vorhergehenden Ansprüche,
wobei ein Zeitstempel für den Zeitpunkt des Notsignals in das Triggersignal codiert ist.

7. Anordnung (10, 12) nach einem der vorhergehenden Ansprüche,
wobei die zweite Triggerschnittstelle (24) als Infrarotschnittstelle ausgebildet ist.

8. Verfahren zum Bestimmen der Bewegung einer abzusichernden Maschine (30), insbesondere eines Roboters oder eines Fahrzeugs, nach einem sicherheitsgerichteten Notsignal, wobei
- ein Sensormodul (10) mit mindestens einem Sensor (14, 16) für die Erfassung von die Bewegung der Maschine (30) beschreibenden Bewegungsdatenlösbar an der Maschine (30) angebracht wird,
- ein Triggermodul (12) zusätzlich an eine Leitung angeschlossen wird, mit der eine bestehende Sicherheitsanwendung sicherheitsgerichtete Signale an die überwachte Maschine überträgt, um einen sicherheitsgerichteten Nothalt der Maschine (30) auszulösen, oder das Triggermodul (12) selbst testweise sicherheitsgerichtete Signale erzeugt,
- das Triggermodul (12) ein Triggersignal, welches den Zeitpunkt des Notsignals enthält, an das Sensormodul (10) überträgt und
- Bewegungsdaten des Sensormoduls (10) zwischen dem durch das Triggersignal bezeichnetem Zeitpunkt des Notsignals und Erreichen eines sicheren Zustands der Maschine (30) gespeichert oder ausgegeben werden.

9. Verfahren zur Konfiguration und/oder Verifikation mindestens eines Sicherheitssensors (32), der eine abzusichernde Maschine (30) überwacht und bei Unterschreiten eines Sicherheitsabstands zwischen Maschine (30) und einem erfassten unzulässigen Objekt ein sicherheitsgerichtetes Nothaltsignal an die Maschine (30) ausgibt, wobei die Bewegung der Maschine (30) nach einem sicherheitsgerichteten Nothaltsignal mit dem Verfahren nach Anspruch 8 bestimmt wird und der Sicherheitsabstand anhand der gespeicherten oder ausgegebenen Bewegungsdaten verifiziert oder angepasst wird.
